# EUROPÄISCHE PATENTSCHRIFT

(11) **EP 0 698 474 B1**
(45) Veröffentlichungstag und Bekanntmachung des Hinweises auf die Patenterteilung: **24.11.1999**
(21) Anmeldenummer: 95107211.5
(22) Anmeldetag: 12.05.1995
(51) Int. Cl.: B29C 65/34, F16L 47/02

(54) **Formteil aus einem thermoplastischen Kunststoff**
Moulded part of thermoplastics material
Pièce moulée en matière thermoplastique

(30) Priorität: 13.06.1994 CH 185494
(43) Veröffentlichungstag der Anmeldung: 28.02.1996
(73) Patentinhaber: Georg Fischer Rohrleitungssysteme AG, CH-8201 Schaffhausen (CH)
(72) Erfinder: Steinmetz, Hans-Werner, CH-8200 Schaffhausen (CH); Petry, Dirk Alexander, CH-8245 Feuerthalen (CH); Messmer, Alfred, D-78250 Tengen 3 (DE)
(74) Vertreter: Weibel, Beat

(56) Entgegenhaltungen:
- EP-A- 0 173 174
- EP-A- 0 352 128
- EP-A- 0 399 081
- DE-C- 2 760 064
- DE-C- 4 018 396

## Beschreibung

Die vorliegende Erfindung betrifft ein Formteil aus einem thermoplastischen Kunststoff, wie es im Oberbegriff von Anspruch 1 beschrieben ist.

Ein als Schweissmuffe ausgebildetes Formteil ist durch die DE-C2-27 60 064 bekanntgeworden. Hierbei besteht die Schweissanzeige aus einem in einem zylindrischen freien Raum des Muffenkörpers angeordneten Fühlerstift, welcher im wesentlichen zylindrisch ausgebildet ist und vor seiner durch das Schweissen entstehenden Verformung eine mit dem Aussenumfang bündige Spitze aufweist.

Der Fuss des Fühlerstiftes ist am Grund des freien Raumes nahe des elektrischen Widerstandsheizdrahtes angeordnet. Nachteilig bei dieser Schweissanzeige ist, dass beim Aufschmelzen der dünnen Wand des Muffenkörpers im Bereich des freien Raumes diese durchbrechen und das aufgeschmolzene thermoplastische Material aus dem freien Raum austreten kann. Bedingt durch diese Schmelzbewegungen kann es zu Kurzschlüssen und damit zu lokalen Überhitzungen und Materialverbrennungen kommen.

Aus der EP-A-0399081 ist eien Schweissmuffe bekannt, die einen Anzeigezapfen aufweist, der durch eine Druckfeder radial nach innen belastet wird. Beim Schweissvorgang wird neben dem Muffenmaterial auch der innere Teil des Anzeigezapfens geschmolzen und durch die Druckfeder radial nach innen verdrängt, so dass der Anzeigezapfen nicht mehr von der Mantelfläche der Muffe abragt. Bei dieser Ausführung ist vor allem der notwendige Einbau einer Druckfeder aufwendig.

In der DE-C-40 18 296 wird ein Schweissfitting mit offener Ausnehmung zur Aufnahme eines Anzeigestiftes beschrieben, bei dem beim Schweissvorgang der Anzeigestift nach aussen gedrückt wird. Sowohl Anzeigestift wie Ausnehmung weisen eine gestufte Aussen- bzw. Innenfläche auf mit jeweils unterschiedlichen Durchmessern. Die Dichtfläche von Anzeigestift und Ausnehmung liegt im Uebergangsbereich der zwei Durchmesser. Ein passgenaues Zusammenfügen von Anzeigestift und Ausnehmung ist hier nicht gewährleistet, sodass beim Erkalten der Anzeigestift in die Ausnehmung zurückfallen kann. Dadurch entsteht Unsicherheit darüber ob die Schweissung vollständig erfolgt ist.

Ausgehend von diesem nächstliegenden Stand der Technik (DE-C-4018 396) stellt sich die vorliegende Erfindung die Aufgabe, ein Formteil vorzuschlagen mit einer Schweissanzeige der genannten Art, bei welchem ohne Austritt von thermoplastischem Material eine definierte Anzeige für eine erfolgte Schweissung gegeben ist und welche ohne zusätzliche Teile gleichzeitig bei der Herstellung des Formteiles z.B. im Spritzgussverfahren integriert erstellbar ist.

Erfindungsgemäss wird diese Aufgabe durch die kennzeichnenden Merkmale von Anspruch 1 gelöst.

Anhand der beiliegenden Zeichnung wird eine Ausführungsform der Erfindung näher beschrieben. Es zeigen:
- Fig. 1: einen Längsschnitt durch ein als Schweissmuffe ausgebildetes Formteil
- Fig. 2: einen vergrössten Ausschnitt aus Fig. 1 vor einer Schweissung und
- Fig. 3: die in Fig. 2 gezeigten Ausschnitt nach der Schweissung.

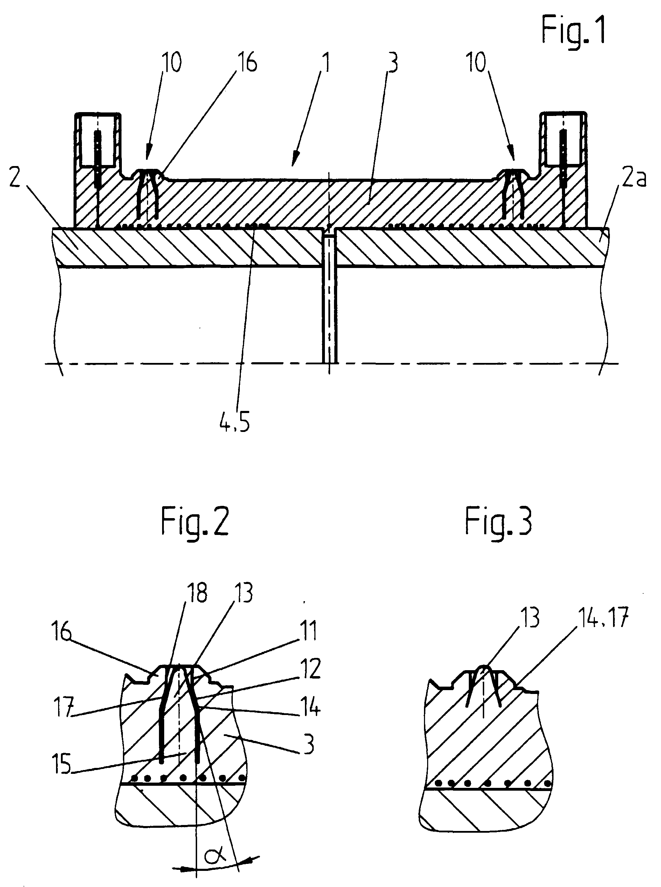

Fig. 1 zeigt ein als Schweissmuffe 1 ausgebildetes Formteil zum Verbinden von Leitungselementen, wie z.B. Enden von Rohrleitungen 2 und 2a aus einem thermoplastischen Kunststoff. Ein Formteilkörper bzw. Muffenkörper 3 weist in der Nähe der Innenwand oder direkt daran ein Heizelement 4 auf, welches aus einem spiralförmig gewundenen Widerstandsdraht 5 besteht, dessen Enden zum Anschliessen an ein Gerät mit einer Stromquelle aus dem Formteilkörper 3 herausgeführt bzw. mit einem Steckkontakt verbunden sind.

An den beiden Enden des Schweissbereiches des Formteiles ist je eine Schweissanzeige 10 angeordnet. Diese weist, wie aus den Fig. 2 und 3 ersichtlich, einen Ventilkörper 13 auf, der aus dem Material des Formteil- bzw. des Muffenkörpers 3 ausgebildet ist.

Der Ventilkörper 13 ist in seinem Basisbereich mit dem Formteilkörper verankert und weist eine sich nach aussen konisch verjüngende Partie auf. Vorzugsweise ist der Ventilkörper 13 mindestens teilweise als kreisrunder Kegel mit einem abgerundenten Ende ausgebildet. Der den Ventilkörper umgebende Bereich 11 des Formteiles weist eine entsprechende konische bzw. kegelige Anlagefläche 14 auf, welche anschliessend in Richtung zur Aussenkontur des Formteil- bzw Muffenkörpers 3 in einen zylindrischen Teil 18 übergeht. Der Neigungswinkel α des Kegels am Ventilkörpers 13 und der Anlagefläche 14 beträgt vorzugsweise zwischen 10° und 20°, wobei dieser Winkel für das Entformen des Formteiles bei der Herstellung im Spritzgussverfahren vorteilhaft ist, damit der hinterschnittene Bereich 11 noch ohne bleibende Deformation entformt werden kann.

Vorzugsweise kann an der Aussenkontur des Formteil- bzw Muffenkörpers 3 um den Bereich 11 ein ringförmiger Wulst 16 angeordnet werden, wodurch die Ausformung des hinterschnittenen Bereiches 11 erleichtert wird.

Zwischen dem Ventilkörper 13 und der Innenwandung des Bereiches 11 können zum Ventilkörper 13 längs verlaufende, als Filmscharniere ausgebildete dünne Wände angeordnet werden, wodurch der Ventilkörper 13 geführt gehalten wird. Es können zwei oder mehrere, vorzugsweise drei derartige Wände angeordnet sein.

Durch die erfindungsgemässe Ausbildung der Schweissanzeige 10 wird verhindert, dass beim Schweissvorgang aufgeschmolzenes thermoplastisches Material, das unter erhöhten Druck gerät nach aussen in den freien Raum 12 durchbrechen kann . Durch das Herausdrücken des Ventilkörpers 13 beim Schweissen, wird dieser mit seinen konischen Flächen 17 an die konische Anlagefläche 14 des Bereiches 11 angedrückt (siehe Fig. 3), wodurch eine Sperre für den Austritt von aufgeschmolzenem thermoplastischen Material entsteht und sich ein für eine einwandfreie Schweissung erforderlicher Schweissdruck durch die Ausdehnung des Kunststoffes aufbauen kann. Die eingangs erwähnten Schmelzebewegungen treten dabei nicht auf. Die über die Aussenkontur des Formteil- bzw Muffenkörpers 3 hinausragende Spitze des Ventilkörpers 13 zeigt an, dass eine Schweissung erfolgt ist.

Der Hub des Ventilkörpers 13 ist durch die Spaltweite zwischen der konischen Anlagefläche 14 des Bereiches 11 und der konischen Fläche 17 des Ventilkörpers 13 gegeben und sollte so gross sein, dass eine gute optische Wahrnehmung der herausgeschobenen Spitze des Ventilkörpers 13 gegeben ist.

Damit beim Erkalten des thermoplastischen Kunststoffes nach dem Schweissen ein eventuelles Zurückgleiten des Ventilkörper 13 in die Ausnehmung verhindert wird, kann der Bereich 11 mit einem Ringwulst versehen sein, welcher in eine Ringnut des herausgedrückten Ventilkörpers 13 einrastet, wodurch dieser in der ausgedrückten Lage gehalten wird.

Die beschriebene Anordnung kann auch an Schweisspartien von Sattelteilen z.B. bei Anbohr- oder Abzweig-Formteilen oder an Schweisspartien von anderen Formteilen angeordnet sein.

## Patentansprüche

1. Formteil aus einem thermoplastischen Kunststoff mit mindestens einer Schweisspartie, welche ein aus einem Widerstandsdraht (5) bestehendes Heizelement (4) zur Herstellung einer Schweissverbindung mit Leitungselementen (2,2a) aufweist, wobei im Formteil aus dem Material des Formteils im äusseren Bereich desselben mindestens ein Ventilkörper (13) gebildet ist, der beim Schweissvorgang gegen eine entsprechend geformte Fläche des Formteilkörpers (3) drückbar ist, dadurch gekennzeichnet, dass der Ventilkörper (13) mindestens teilweise als Kegel mit einer abgerundeten Kegelspitze ausgebildet ist, dass der Neigungswinkel (α) der konischen Flächen (14,17) am Ventilkörper (13) und am Formteilkorper (3) zwischen 10° und 20° beträgt und dass der den Ventilkörper (13) umgebende Bereich (11) des Formteil körpers (3) mit einem Ringwulst versehen ist, welcher in eine Ringnut am konischen Ende des Ventilkörpers (13)einrastbar ist.

## Claims

1. Moulded part of a thermoplastics material with at least one welding portion which has a heating element (4), comprising a resistor wire (5), for producing a welded connection to conduit elements (2, 2a), there being formed in the moulded part from the material of the moulded part, in the outer region of the same, at least one valve body (13), which can be pressed against a correspondingly shaped surface of the moulded part body (3) during the welding operation, characterized in that the valve body (13) is designed at least partly as a cone with a rounded-off cone tip, in that the angle of inclination (α) of the conical surfaces (14, 17) on the valve body (13) and on the moulded part body (3) is between 10° and 20° and in that the region (11) of the moulded part body (3) surrounding the valve body (13) is provided with an annular bead, which can be snap-fitted into an annular groove at the conical end of the valve body (13).

## Revendications

1. Pièce moulée en une matière plastique thermoplastique avec au moins une partie de soudage, qui présente un élément de chauffage (4) composé d'un fil de résistance (5) pour la réalisation d'un assemblage soudé avec des éléments de conduite (2, 2a), dans laquelle au moins un corps de soupape (13) est formé dans la pièce moulée à partir de la matière de la pièce moulée, dans la région extérieure de celle-ci, lequel peut être pressé, lors de l'opération de soudage, contre une face du corps de la pièce moulée (3) façonnée de façon correspondante, caractérisée en ce que le corps de soupape (13) prend au moins en partie la forme d'un cône avec un sommet arrondi, en ce que l'angle d'inclinaison (α) des faces coniques (14, 17) dans le corps de soupape (13) et dans le corps de la pièce moulée (3) est compris entre 10° et 20° et en ce que la région (11) du corps de la pièce moulée (3) entourant le corps de soupape (13) est pourvue d'un bourrelet annulaire, qui peut être engagé dans une rainure annulaire à l'extrémité conique du corps de soupape (13).
